# EUROPEAN PATENT APPLICATION

(11) **EP 4 686 860 A1**
(43) Date of publication of application: **04.02.2026**
(21) Application number: 24191882.0
(22) Date of filing: 30.07.2024
(51) Int. Cl.: F16J 15/00, F16J 15/06, F16J 15/3296

(54) **DEVICE WITH A FIRST SPACE AND A FIRST SEALING**

(71) Applicant: Aktiebolaget SKF, 415 50 Göteborg (SE)
(72) Inventor: van der Ham, Andreas Clemens, 7231 RB Warnsveld (NL); Stefan, Mario, 97711 Poppenlauer (DE); Arroud, Galid, 3544 ML Utrecht (NL); Zimmermann, Rob, 3511VG Utrecht (NL)
(74) Representative: Kuhstrebe, Jochen

(57) **Abstract**

The invention starts from a device (10) with a first space (12) and a first sealing (14), which seals the first space from a second space (16).

It is suggested the device comprises two metal regions (18, 20), which are located in the first space, and a control unit (28), which is designed for measuring a voltage between the metal regions and/or a resistance between the metal regions and/or a current between the metal regions and/or a conductance between the metal regions, wherein the two metal regions are made from different metals and/or the device (10) comprises a conductive route from one of the two metal regions to the other of the two metal regions which runs at least in two different metals.

## Description

The invention concerns a device with a first space and a first sealing, which seals the first space from a second space.

An issue is that water in various states (e.g. it can be in its dissolved, emulsified or free state within the lubricant) can progressively accumulate unnoticed inside a mechanical system (e.g. due to unexpected seal failure). This will provoke issues as it is a hidden threat to the system (e.g. causing corrosion, excessive wear and hydrogen embrittlement) that goes undetected until real problems arise, such as malfunctioning or failure of the mechanical system. A direct consequence is that one is forced to interrupt the asset's operation to carry out a reactive maintenance. All of this leads to a sudden increase in the asset's total cost of ownership, which can be in some cases substantially high (e.g. offshore installations).

The Karl Fischer (KF) titration measurement procedure is a standardized analysis procedure (although requiring specific measurement equipment) that can trace the amount of water in grease samples. Yet, one of the major bottlenecks with this offline approach is that the application needs to be paused to take out grease samples to analyze them in a laboratory.

The document WO 2014/094812 A1 discloses a bearing with a sealing, which seals a space of the bearing from a further space. A method of condition monitoring of grease is described. The documents WO 2014/094813 A1, US 2018 238 851 and US 2018 038 417 describe further related prior art.

Furthermore, especially in the case of applications with high-value assets, sealing systems (either in single or multiple seals configuration) are being overdesigned to delay water ingress, hence, minimizing the risk of the contaminant reaching the application's critical space. Another approach is to perform preventive maintenance long before the seal is expected to fail, however, this comes at a great financial cost.

The problem of the invention is in particular to provide efficient protection against damage caused by liquid ingress. The problem is solved according to the invention by the features of claim 1 and by the features of claim 9, while advantageous embodiments of the invention are described in the subclaims.

The invention proceeds from a device with a first space and a first sealing, which seals the first space from a second space.

It is proposed that the device comprises two metal regions, which are located in the first space, and a control unit, which is designed for measuring a voltage between the metal regions and/or a resistance between the metal regions and/or a current between the metal regions and/or a conductance between the metal regions, wherein the two metal regions are made from different metals and/or the device comprises a conductive route from one of the two metal regions to the other of the two metal regions which runs at least in two different metals. By the fact that the route "runs at least in two different metals", it should be understood in particular that one part of the route is made from a first metal and a second part of the route is made from a second metal, which is different from the first metal. Through this efficient protection against damage caused by liquid ingress can be provided. In particular, a change in the voltage and/or the current and/or the resistance and/or the conductance can be used to notice the presence of a liquid caused by a failure of the sealing.

In particular, the control unit can comprise a processor and memory, in which an operating program is saved. In particular, the control unit can comprise one or more sensors.

With advantage are the metal regions spaced apart from each other and the control unit is configured to create a signal, when the voltage between the metal regions and/or the current reaches or surpasses a predetermined value. Thereby a signal can be created when a certain liquid is present between the metal regions.

Furthermore, it is suggested that the predetermined value depends on a difference of an anodic index of the different metals. Through this the presence of water between the metal regions can be recognized.

Advantageously the control unit is configured to create a signal, when the resistance reaches or surpasses a predetermined resistance value and/or the conductance reaches or falls below a predetermined conductance value. Thereby a deterioration of one of the metals due to the presence of an electrolyte can be noticed. In particular, the electrolyte can be water.

Moreover, it is proposed that at least one of the metal regions has a shape of a ring or a ring segment. Through this an interaction between this metal region and a liquid can take place in a relatively large area, which means that a presence of a liquid can also be recognized in this relatively large area.

With advantage is the first sealing a part of a second sealing of the device. Thereby a failure of the first sealing can be detected at a time, when the second sealing still functions partially.

Furthermore, it is suggested that the different metals, from which the two metal regions are made of, have different anodic indices. Thereby a voltage, which can be detected, is created when a space between the two metal regions is filled with water.

Moreover, it is proposed that the two different metals have different anodic indices. Through this detectable change of a resistance of one of the metals happens when water is in contact with the metals.

With advantage at least one of the metal regions and/or the control unit are integrated into the first sealing and/or into a second sealing of the device. Thereby the device can be built with a low number of components.

Advantageously an insulator, which is a solid, is located between the two metal regions. Thereby a contact between the two metal regions is safely avoided.

Moreover, a device, in particular as described above, with a first space and a sealing, which seals the first space from a second space, is proposed, wherein at least one sensor, which is designed for detecting at least one liquid and which is at least partially located within the sealing. Through this efficient protection against damage caused by liquid ingress can be provided. In particular, liquid can be detected in an early stage.

Furthermore, it is suggested that the sensor is a capacitive sensor. Through this a high sensitivity and a fast response time can be achieved.

Further advantages can be seen in the following description of the drawings. Embodiments of the invention are shown in the drawings. The drawings, the description and the claims contain numerous features in combination. The skilled person will expediently also consider the features individually and combine them to form useful further combinations.
Fig. 1 shows a partial axial section through a device according to the invention,
Fig. 2 shows a part of figure 1 in a magnified way,
Fig. 3 shows a part of figure 2 in a magnified way,
Fig. 4A shows an exploded view of a carrier and parts, which are carried by the carrier,
Fig. 4B shows a detail of the carrier in a perspective view,
Fig. 5 shows a section as indicated in figure 1,
Fig. 6 shows a wire in a state, in which it is straight, and
Fig. 7 shows a section of an alternative embodiment of a sensor of the device.

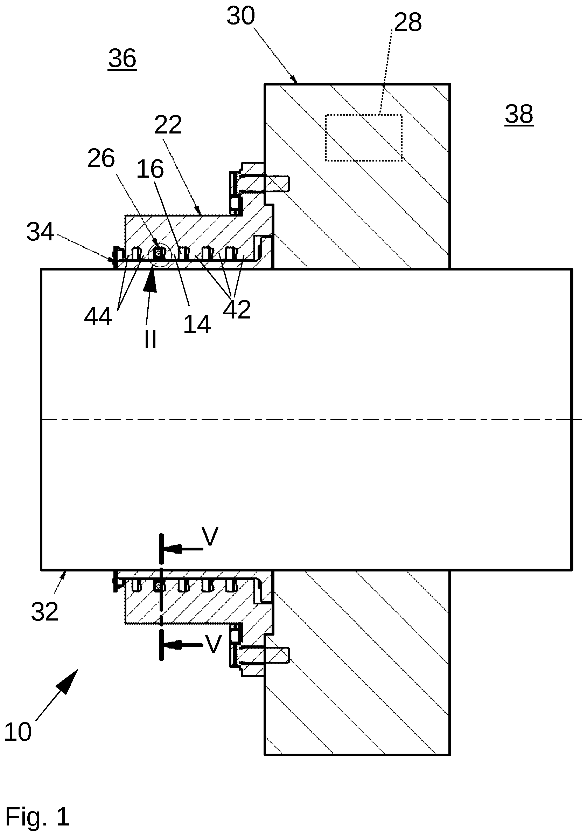

Figure 1 shows a partial axial section through a device 10 according to the invention, which comprises a housing 30, a liner 34 and a shaft 32, which is designed to rotate relative to the housing. The liner 34 is fixed to the shaft in a liquid-tight way. The device compromises a first sealing 14 and a second sealing 22. The first sealing 14 is a part of the second sealing 22. The second sealing is fixed to the housing 30 in a liquid-tight way and seals a space 36 of the device against a space 38, which is outside of the device, by providing a sealing function between the housing 30 and the liner 34. Alternatively, the liner can be omitted and the sealing function can be provided between the housing and the shaft.

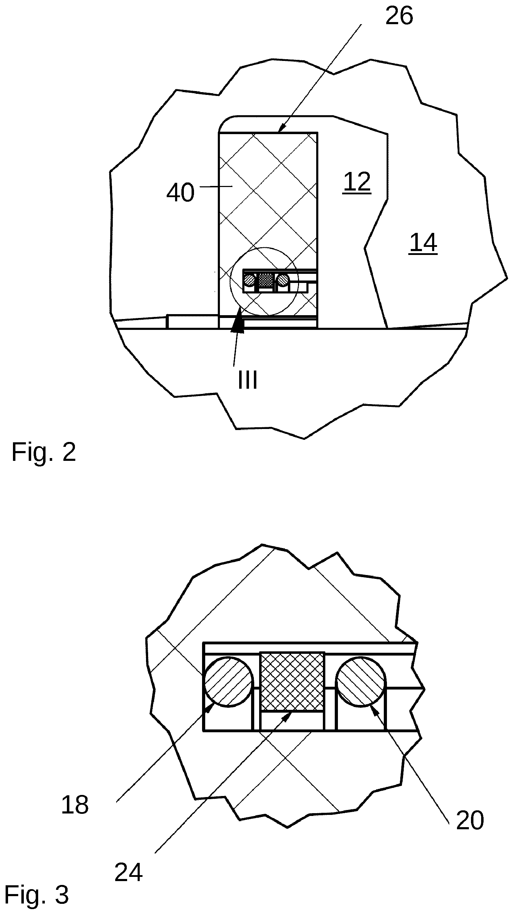

The first sealing 14 seals a space 12 of the device against space 16 of the device. Each of the spaces 12, 16 is a chamber of the sealing 22. The sealing 14 abuts against the liner 34. Alternatively, the sealing 14 and the liner 34 form a gap ring. The device comprises two metal regions 18, 20 (figures 2 and 3), which are located in the space 12. Each of the metal regions consists of a wire and has a shape of a ring segment, which is almost a complete ring. The ring segments have the same diameter. Moreover, the device comprises an insulator 24, which is located between the two metal regions 18, 20 and which is a solid. The insulator 24 has the same shape and the same diameter as the metal regions. The metal regions and the insulator surround the shaft almost completely in the circumferential direction of the shaft. The device also comprises a carrier 40, which carries the metal regions and the insulator in a way, such that the metal regions and the insulator have contact to the part of the space 12, which is outside of the carrier 40. The carrier 40 is located in the space 12. Together the carrier 40, the metal regions and the insulator form a sensor 26.

Furthermore, the device comprises a control unit 28, which is configured for measuring a voltage between the metal regions. The two metal regions are made from different metals, which have different anodic indices. For example, the metal region 18 can consist of zinc or tin and the metal region 20 can consist of copper. The metal regions 18, 20 are spaced apart from each other.

The control unit 28 is configured to create a signal, when the voltage between the metal regions reaches or surpasses a predetermined value. The predetermined value depends on a difference of an anodic index of the different metals. For example, the predetermined value can be the difference of the anodic indices of the different metals minus 20% of this difference. When the metal region 18 consists of zinc and the metal region 20 consists of copper, the following happens, when the metal regions are connected with water:
- At the zinc-electrode, an oxidation reaction takes place: *Zn*(*s*) → *Zn*²⁺ + 2 *e*⁻ ; yielding an oxidation potential E° = -0.76 V
- At the copper-electrode, a reduction reaction takes place: *Cu*²⁺ + *2e*⁻ → *Cu*(*aq)*; yielding a reduction potential E° = 0.16 V

In practice, the voltage difference between the electrodes is slightly lower than the calculated value.

The sealing 22 comprises further sealings 42 which take part in sealing the space 36 from the space 38. If the sealings 42 fail, water will intrude into the space 12, if the space 38 contains water. If the metal regions are connected by water, voltage between the metal regions builds up and the control unit will create a signal, which indicates to a user of the device via a display and/or via an acoustic noise that water is inside the space 12. When water is inside the space 12, sealings 44, which are a part of the sealing 22, can still function and provide a sealing between to space 36 and to space 38. Each of the sealings 44 abuts against the liner 34 or builds a gap ring with the liner.

Optionally further sensors, which are identical in construction with the sensor 26, can be put in a chamber between the sealings 44 and/or in chambers between the sealings 42. The further sensors can work together with the control unit in the same way as the sensor 26.

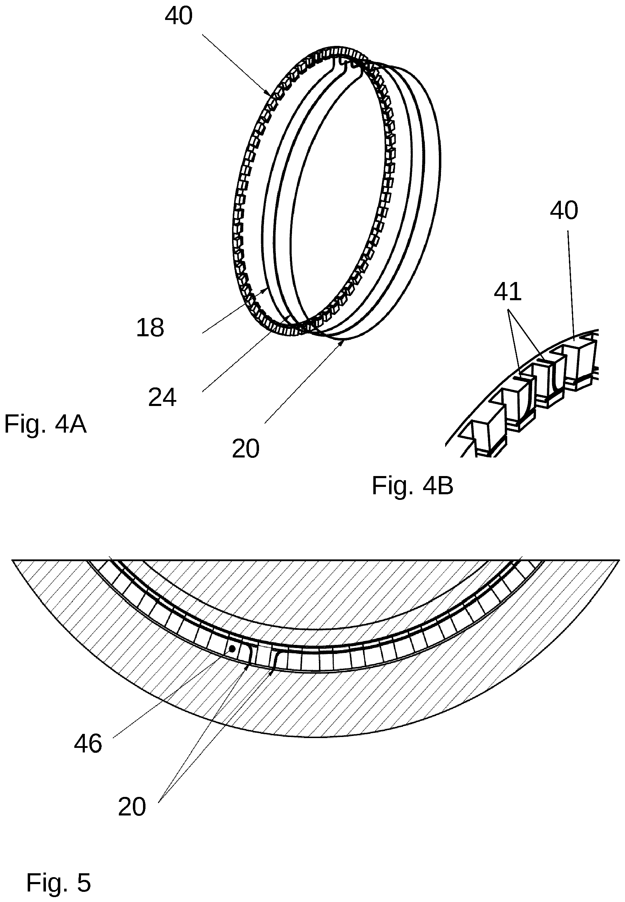

Figure 4A shows the sensor 26 in an exploded view.

Figure 5 shows a section as indicated in figure 1. Viewed in an axial direction of the shaft the carrier 40 contains gaps 46 in the wire support. Ends 48 of the metal region 20 are connected to the control unit.

It is possible to provide the device with further sensors which are identical in construction with the sensor 26, wherein one of the sensors can be located between neighbouring sealings of the sealing 22. Then the device can comprise five sensors. It is also possible to equip each chamber of the sealing 22 with multiple of the sensors. The progression of wear can be monitored. This allows for seal replacement before total degradation of the sealing system and to extend the service life of the sealing. By monitoring the degradation, the right moment in time can be chosen when to replace the seal. The control unit can be connected to a monitoring system. This can be a monitoring system of an arrangement, which contains the device.

The sensor can either be integrated or placed into the sealing 22 and/or into the sealing 14. For example, more than fifty percent or more than 75 percent of the surfaces of the metal regions 18, 20 can touch the sealing 22 and/or the sealing 14. The metal regions 18, 20 can be directly fixed to the sealing 22 or to the sealing 14. Furthermore, the control unit 28 can be fixed to the sealing and/or can be located within the sealing 22.

The invention presents a cost and energy effective solution to inform the owner if water has creeped into the system so that appropriate actions can be taken in a timely manner.

An advantage is that with the ability to detect water leakage, the service life can be increased. Extending the service life reduces the operational cost for the end user.

In principle, water leakage sensing can be fitted to any sealing system, provided that there is enough space. This can be used to at least detect the fact of leakage and invoke activities that would avoid more consequential damage.

The simplicity of the working principle behind this invention will allow to equip various types of mechanical systems (across many industries) with a method for detecting water ingress. Furthermore, the method is not limited by the application's size, hence, it's scalable. Especially given the fact that the method requires a relatively low investment cost (material resource) and is energy efficient (i.e. passive detection method). The length of the electrodes can be adapted to the size of the application.

Yet another advantage of the present invention is its positive impact on the asset's maintenance management and how it changes it for the better. More specifically, having a look at the current situation: when there is a sealing barrier in the mechanical system, its unknown condition forces the asset's owner to either execute periodic maintenance according to a fixed schedule (also known as preventive maintenance) or do as soon as possible reactive maintenance (immediate repair/replacement) in case an unexpected failure occurs to the system. In both cases, the consequence is that the maintenance cost is substantially high and weighs on the asset's total cost of ownership since there is no sensor unit informing the asset's owner on the occurrence of water ingress into the system. This is especially true in case the asset is difficult to access, e.g. offshore installations.

Now, the present invention will allow to improve the approach for managing the asset's maintenance resulting in maximizing the asset's life. For example:
In case there is a single seal in the mechanical system, then the asset owner is at least informed by the sensor that water ingress is happening so that a decision can be taken on time to take the necessary actions, hence, minimizing the chance of major damage happening to the asset.
In case of multiple seals forming a sealing barrier within the mechanical system, then multiple sensor units can be smartly positioned within the available spaces of the sealing system. This gives an advantage to the asset's owner to align/correct the timing of the scheduled maintenance if water ingress happens. More specifically, one of the sensor units will alert the asset's owner if water is creeping past the first seal of the sealing system. This entails, for example, that a decision can be made to not react immediately to not interfere with the asset's operation since it can still safely operate until the next planned maintenance since there are still multiple seals that are being monitored by the placed sensors.

Another potential advantage of the present invention is that the scope of the sensing method can be potentially enlarged to monitor the ingress of other types of liquid contaminants (besides water) in mechanical systems by selecting appropriate electrode materials.

All by all, an important advantage is that this invention allows the asset's owner to have a first insight/indication (although indirectly) on the ingress of water in a mechanical system. This alone will lead to optimizing the asset's life while having more grip (i.e. lowering) its total cost of ownership.

The device can for example be a part of a marine vessel or a tidal turbine. The sealing 22 can for example protect a bearing, which is located in the space 36, from water.

Since the metal regions 18, 20 are almost a ring, they have a large surface, which means that the risk, that they are completely covered by grease (this could impact the functioning of the device) is low.

The ends of the metal regions 18, 20 can run in channels 41 within the carrier radially outwardly towards the control unit (figures 4A and 4B). The carrier can be made from two halves, which are rings and clipped together.

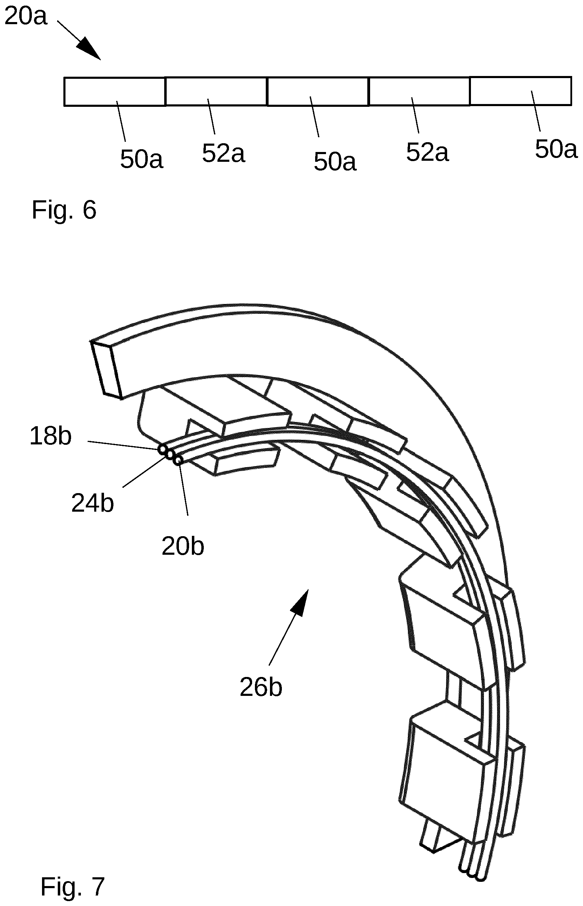

Figs. 6 and 7 show alternative embodiments. Components, features and functions that are essentially the same are generally numbered with the same reference signs. However, the letters "a" or "b" have been added to the reference numerals of these alternative embodiments in Fig. 6 and Fig. 7 to differentiate between the embodiments. The following description is essentially limited to the differences to the embodiment in Fig. 1 to Fig. 5, whereby reference can be made to the description of the embodiment in Fig. 1 to Fig. 5 with regard to components, features and functions that remain the same.

A further embodiment of the invention deviates from the embodiment shown in the figures 1 to 5 through the following: the metal region 18 and the insulator 24 is not present. The metal region 20a (figure 6), which is a wire, consists of segments 50a and segments 52a, which are stringed together in an alternate way: after each segment 50a a segment 52a is located and touches this segment 50a and after each segment 52a a segment 50a is located and touches this segment 52a. Neighboring segments are fixed to each other in a conductive way. The segments 50a consist of a first metal. The segments 52a consist of a second metal, which is different from the first metal. The two different metals have two different anodic indices. For example, the segments 50a consist of copper and the segments 52a consist of zinc. The control unit 28 measures the conductance between the ends of the metal region 20a, which means between the ends of the wire. When the wire is exposed to water, the conductance of the wire deteriorates. The zinc corrodes. The control unit is configured to create a signal, when the conductance reaches or falls below a predetermined conductance value. A variation of this embodiment is to create the metal region 20a differently: For example, by winding a zinc wire around a copper wire.

Figure 7 shows a section of an alternative embodiment of a sensor 26b. The sensor 26b is also ring shaped.

An even further embodiment of the invention has a sensor 26 as shown in figure 1, which means, the sensor 26 is located within the sealing 22. This embodiment deviates from the embodiment shown in the figures 1 to 5 through the following: the sensor 26 is capacitive sensor. When water intrudes in the space 12, the capacitive sensor senses this. Since the capacitive sensor is connected with the control unit 28, the control unit creates a signal, when the capacitive sensor senses the water.

### List of reference numerals:

| | |
|---|---|
| 10 | device |
| 12 | space |
| 14 | sealing |
| 16 | space |
| 18 | region |
| 20 | region |
| 22 | sealing |
| 24 | insulator |
| 26 | sensor |
| 28 | control unit |
| 30 | housing |
| 32 | shaft |
| 34 | liner |
| 36 | space |
| 38 | space |
| 40 | carrier |
| 41 | channel |
| 42 | sealing |
| 44 | sealing |
| 46 | gap |
| 48 | end |
| 50 | segment |
| 52 | segment |

## Claims

1. Device (10) with a first space (12) and a first sealing (14), which seals the first space from a second space (16),
**characterized by**
two metal regions (18, 20), which are located in the first space, and a control unit (28), which is designed for measuring a voltage between the metal regions and/or a resistance between the metal regions and/or a current between the metal regions and/or a conductance between the metal regions, wherein the two metal regions are made from different metals and/or the device (10) comprises a conductive route from one of the two metal regions to the other of the two metal regions which runs at least in two different metals.

2. Device (10) according to claim 1,
**characterized in that**
the metal regions (18, 20) are spaced apart from each other and the control unit (28) is configured to create a signal, when the voltage between the metal regions and/or the current reaches or surpasses a predetermined value.

3. Device (10) according to claim 2,
**characterized in that**
the predetermined value depends on a difference of an anodic index of the different metals.

4. Device (10) according to at least one of the preceding claims,
**characterized in that**
the control unit (28) is configured to create a signal, when the resistance reaches or surpasses a predetermined resistance value and/or the conductance reaches or falls below a predetermined conductance value.

5. Device (10) according to at least one of the preceding claims,
**characterized in that**
at least one of the metal regions (18, 20) has a shape of a ring or a ring segment.

6. Device (10) according to at least one of the preceding claims,
**characterized in that**
the first sealing (14) is a part of a second sealing (22) of the device (10).

7. Device (10) according to at least one of the preceding claims,
**characterized in that**
at least one of the metal regions (18, 20) and/or the control unit (28) are integrated into the first sealing (14) and/or into a second sealing (22) of the device.

8. Device (10) according to at least one of the preceding claims,
**characterized by**
an insulator (24), which is located between the two metal regions (18, 20) and which is a solid.

9. Device (10), in particular according to at least one of the preceding claims, with a first space (12) and a sealing (22), which seals the first space from a second space (16), **characterized by**
at least one sensor (26), which is designed for detecting at least one liquid and which is at least partially located within the sealing.

10. Device (10) according to claim 9,
**characterized in that**
the sensor (26) is a capacitive sensor.

## Amended claims

### Amended claims in accordance with Rule 137(2) EPC.

1. Device (10) with a first space (12), a first sealing (14), which seals the first space from a second space (16), two metal regions (18, 20), which are located in the first space, and a control unit (28),
**characterized in that**
the control unit (28) is designed for measuring a voltage between the metal regions and/or a resistance between the metal regions and/or a current between the metal regions and/or a conductance between the metal regions, wherein the two metal regions are made from different metals and/or the device (10) comprises a conductive route from one of the two metal regions to the other of the two metal regions which runs at least in two different metals.

2. Device (10) according to claim 1,
**characterized in that**
the metal regions (18, 20) are spaced apart from each other and the control unit (28) is configured to create a signal, when the voltage between the metal regions and/or the current reaches or surpasses a predetermined value.

3. Device (10) according to claim 2,
**characterized in that**
the predetermined value depends on a difference of an anodic index of the different metals.

4. Device (10) according to at least one of the preceding claims,
**characterized in that**
the control unit (28) is configured to create a signal, when the resistance reaches or surpasses a predetermined resistance value and/or the conductance reaches or falls below a predetermined conductance value.

5. Device (10) according to at least one of the preceding claims,
**characterized in that**
at least one of the metal regions (18, 20) has a shape of a ring or a ring segment.

6. Device (10) according to at least one of the preceding claims,
**characterized in that**
the first sealing (14) is a part of a second sealing (22) of the device (10).

7. Device (10) according to at least one of the preceding claims,
**characterized in that**
at least one of the metal regions (18, 20) and/or the control unit (28) are integrated into the first sealing (14) and/or into a second sealing (22) of the device.

8. Device (10) according to at least one of the preceding claims,
**characterized by**
an insulator (24), which is located between the two metal regions (18, 20) and which is a solid.

9. Device (10) according to at least one of the preceding claims,
**characterized in that**
the device comprises a second sealing (22), which comprises the first sealing (14), and at least one sensor (26) of the device, which is designed for detecting at least one liquid, is at least partially located within the second sealing (22).
